# EUROPEAN PATENT APPLICATION

(11) **EP 3 157 174 A1**
(43) Date of publication of application: **19.04.2017**
(21) Application number: 16192325.5
(22) Date of filing: 05.10.2016
(51) Int. Cl.: H04B 5/00

(54) **SIGN WITH AN INTEGRATED ELECTRONIC CIRCUIT**

(30) Priority: 14.10.2015 FI 20150169 U
(71) Applicant: Haarnio Oy, 03100 Nummela (FI)
(72) Inventor: Haarnio, Jari, 03100 Nummela (FI)
(74) Representative: Heinonen & Co

(57) **Abstract**

The invention relates to a sign (1) provided with an integrated NFC (Near Field Communication) chip (5) and produced into a physical shape (3) representing the operation that the chip (5) triggers in a mobile device (6).

## Description

This invention relates to a sign produced into a shape and provided with an integrated NFC (Near Field Communication) chip.

### Previously used solutions

Signs with NFC (Near Field Communication) technology have mainly been used in consistency with the official rectangular tag of the NFC functionality.

### Invention

The sign according to invention is characterized in that it is provided with an integrated NFC (Near Field Communication) chip and produced into a physical shape representing the operation that the chip triggers in a mobile device. A phone-shaped sign triggers a phone call in the mobile device. As a shape in accordance with a company logo is used, the chip, for instance, triggers the company's web site on the web browser of the mobile device.

The sign can be coated with a glow-in-the dark paint, or, with a composition which allows it to be also used in security-related applications, as an escape route sign, for example.

The sign can be provided with a battery or solar energy powered light. The light can be used for illuminating the sign. The light is also used for indicating the nature of the operation; as an example, a red light is used in connection with an operation indicating a danger.

### Advantages of the invention

The major advantage of the invention is that the shape of the sign reveals the operation that the NFC chip triggers in the mobile device; such as a call to a predetermined number, accessing a web site on the web browser, playing a media file or activating the flashlight of the phone.

Another major advantage is that the information provided by the sign can be updated via a web-based management server. Therefore, the sign does not have to be reprinted, if, for example, the operation, or, the content of the operation, needs to be changed.

Besides, the invention allows the use of different signs to be measured, which, in turn, results in better service in service concepts, or, in more accurate targeted advertising in marketing concepts.

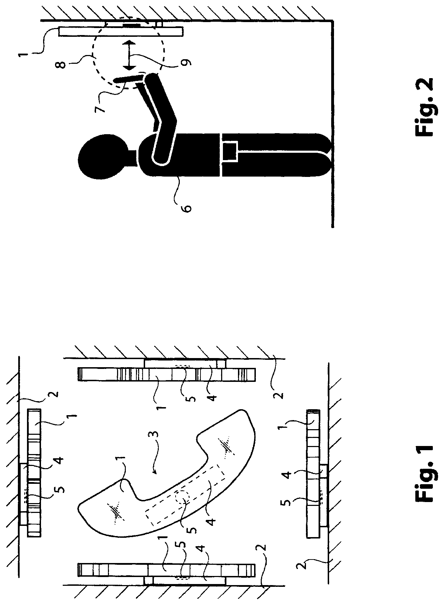

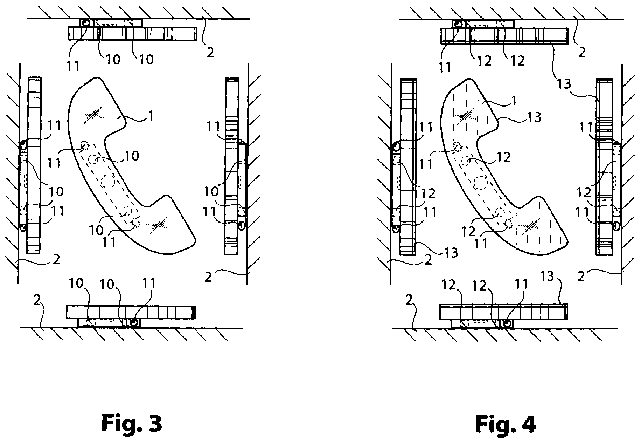

### Detailed description with reference to the accompanying drawing

**Fig 1****.**
   The sign (1) is mounted on a wall (2). The sign (1) is cut into a shape (3) and mounted on the wall by means of an intermediate board (4) containing a NFC chip (5).
**Fig 2****.**
   A user (6) positions his mobile device (7) close to the sign (8) to make the NFC chip and the phone communicate with each other, and the phone (7) triggers an operation indicated by the shape of the sign (1).
**Fig 3****.**
   The same sign (1) as in the above but supplemented with lights (11) powered by batteries (10) and illuminating the sign from the back, from between the wall and the sign.
**Fig 4****.**
   The same sign (1) as in the above but supplemented with lights (11) powered by rechargeable batteries (12) illuminating the sign from the back, from between the wall and the sign. The batteries (12) are recharged with energy from a solar panel cell (13).

## Claims

1. A sign (1), **characterized in that** it is provided with an integrated NFC (Near Field Communication) chip (5) and produced into a physical shape (3) representing the operation that the chip (5) triggers in a mobile device (6).

2. A sign (1) as defined in claim 1, **characterized in that** it is coated with a glow-in-the dark paint or a composition.

3. A sign as defined in any of the preceding claims, **characterized in that** it is supplemented with a light (11) operated by a battery (12) or solar cell technology (13).
